# EUROPÄISCHE PATENTANMELDUNG

(11) **EP 0 735 266 A1**
(43) Veröffentlichungstag der Anmeldung: **02.10.1996**
(21) Anmeldenummer: 96103910.4
(22) Anmeldetag: 13.03.1996
(51) Int. Cl.: F02M 35/026, B01D 47/02, B01D 46/24

(54) **Ölbadluftfilter**

(30) Priorität: 31.03.1995 DE 19511911
(71) Anmelder: FILTERWERK MANN & HUMMEL GMBH, D-71631 Ludwigsburg (DE)
(72) Erfinder: Mössinger, Klaus, 71482 Obersulm (DE); Spaeth, Bernd, 89073 Ulm (DE)
(74) Vertreter: Voth, Gerhard, Dipl.-Ing.

(57) **Zusammenfassung**

Es wird ein Ölbadluftfilter bestehend aus einem Kunststoffgehäuse mit einem Rohlufteinlaß (11) und einem Reinluftauslaß (12) beschrieben.

Im Gehäuse ist ein aus Kunststoff bestehendes Mittelrohr (17) angeordnet. Auf dem Mittelrohr befindet sich ein Filterelement (18), welches im wesentlichen zylinderförmig ausgestaltet ist. Das Gehäuse weist am geodätisch unteren Ende einen Kunststoffdeckel (13) auf. Dieser Kunststoffdeckel ist mittels Schnapp- oder Rastelementen mit dem Gehäuse verbunden. Es ist ferner ein Verschlußelement (19) vorgesehen, welches gleichzeitig den Boden des Filterelements bildet und sich bis in den Kunststoffdeckel erstreckt.

## Beschreibung

Die Erfindung betrifft ein Ölbadluftfilter, insbesondere für die Ansaugluft für Brennkraftmaschinen.

Aus der US-PS 29 66 231 ist ein Ölbadluftfilter bekannt. Dieses besteht aus einem Blechgehäuse an dem ein mit Öl gefüllter Boden befestigt ist. In diesem Blechgehäuse ist ein Filterelement angeordnet, das teilweise in das Ölbad eintaucht. Das Filterelement und der Boden sind mit Schraubverbindungen an dem Gehäuse befestigt. Zum Austausch des Öls bzw. zum Austausch des Filterelements müssen diese Schraubverbindungen gelöst werden. Dies erfordert einen hohen Zeitaufwand. Es sind zwar bereits auch Ölbadluftfilter bekannt, die für den Boden einfache Verschlußsysteme aufweisen auch dort ist jedoch der Austausch des Filterelements aufwendig.

Der Erfindung liegt die Aufgabe zugrunde, ein Ölbadluftfilter zu schaffen, das einfach herstellbar ist und bei dem die Wartung sowie der Austausch einzelner Elemente einfach und zeitsparend durchgeführt werden kann.

Diese Aufgabe wird durch die Merkmale des Hauptanspruchs gelöst.

Ein wesentlicher Vorteil der Erfindung ist darin zu sehen, daß das Gehäuse vorzugsweise aus Kunststoff gefertigt ist. Dies hat den Vorteil, daß relativ einfache Verbindungsmethoden angewendet werden können, wie beispielsweise Schnapp- oder Rastverbindungen. Der Boden in dem sich das Öl befindet ist in vorteilhafter Weise mit Verschlußelementen an dem Gehäuse befestigt und läßt sich ohne Werkzeug entfernen bzw. mit dem Gehäuse verbinden.

Gemäß einer Ausgestaltung der Erfindung ist das Verschlußelement für das Filterelement mit einem Bajonettverschluß an dem Mittelrohr befestigt. Damit läßt sich auch das Filterelement ohne Werkzeuge aus- bzw. einbauen.

Zwischen dem Gehäuse und dem Boden ist eine einfache Dichtung vorgesehen. Es besteht auch die Möglichkeit, anstelle dieser Dichtung den Verbindungsbereich konstruktiv so zu gestalten, daß eine Dichtwirkung erzielt wird, beispielsweise über eine Lippendichtung.

Eine Alternative der Abdichtung zwischen Gehäuse und Deckel besteht darin, daß das Verschlußelement sich bis in den Dichtbereich zwischen Gehäuse und Boden erstreckt und damit die Abdichtung bewirkt. Insbesondere ist es zweckmäßig, das Verschlußelement im Randbereich bis an die Innenkontur des Boden heranzuführen, so daß dieser Randbereich an dem Boden anliegt.

Eine weitere vorteilhafte Ausgestaltung sieht vor, das Gehäuse mit einer Polygon-Außenkontur zu versehen. Auf dieser Außenkontur kann ein Verschlußsystem angeordnet werden, mit dem das Gehäuse sowohl in axialer Richtung als auch in Umfangsrichtung variabel an eine Befestigungsstruktur angekoppelt werden kann.

Auch das Mittelrohr ist über eine Steckverbindung mit dem Gehäuse verbunden. Zur zuverlässigen Verbindung eignet sich eine formschlüssige Verrastung. Hierzu ist das Mittelrohr mit einem Ringwulst versehen, welcher in eine ringförmige Vertiefung eingreift. Die Abdichtung zwischen Mittelrohr und Gehäuse erfolgt in einer bevorzugten Ausgestaltung über eine Lippendichtung.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. Die Zeichnungen zeigen:

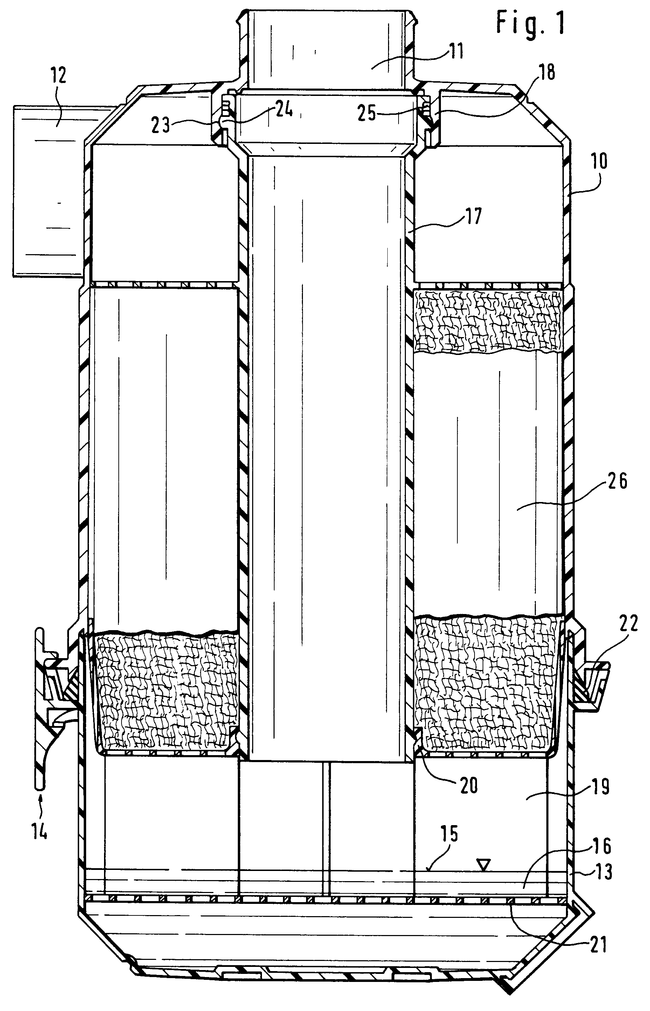

- Figur 1: ein Ölbadluftfilter in einer Schnittdarstellung,
- Figur 2: das Befestigungselement für das Filter.

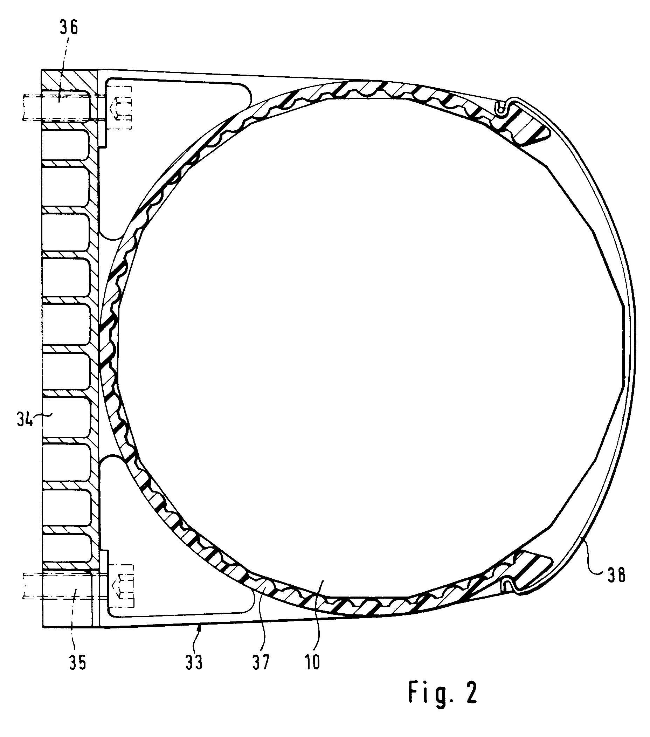

Das Ölbadlfilter besteht aus einem topfförmigen Gehäuse 10, welches einen Rohlufteinlaß 11 und einen Reinluftauslaß 12 aufweist. Dieses Gehäuse ist im unteren Bereich offen und mit einem Kunststoffdeckel versehen. Dieser Kunststoffdeckel 13 wird mittels Schnappverschlüssen 14 mit dem Gehäuse verbunden. Im Kunststoffdeckel 13 befindet sich bis zu einer Füllhöhe 15 das Ölbad 16. Im Gehäuse ist ein Mittelrohr 17 befestigt. Die Befestigung erfolgt an einem Flansch 18 mit welchem das Mittelrohr formschlüssig verbunden ist. Das Mittelrohr trägt das Filterelement 18. Dieses besteht beispielsweise aus einem Kokosfasereinsatz der zum Reinigen einfacher herausnehmbar ist. Hierzu ist am unteren Ende des Filtereinsatzes ein Verschlußelement 19 vorgesehen. Dieses Verschlußelement ist über ein Bajonettverschluß 20 mit dem Mittelrohr verbunden und trägt am geodätisch unteren Ende eine Lochblende 21. Diese Lochblende 21 befindet sich innerhalb der Flüssigkeit und sorgt für eine gleichmäßige Verteilung des zu reinigenden Luftstroms. An der Befestigungsstelle des Deckels mit dem Gehäuse ist ein Dichtelement 22 vorgesehen. Anstelle des Dichtelements oder zur Kombination mit diesem kann das Verschlußelement mit seinem äußeren Durchmesser bis an die innere Wandung des Kunststoffdeckels heranreichen, so daß hier eine zuverlässige Abdichtung der Verbindungsstelle gewährleistet wird. Das Befestigungselement für das Filter ist in Figur 2 dargestellt.

Die Figur 2 zeigt ein Befestigungselment für Filter. Von dem Filter ist das Gehäuse 10 nur schematisch angedeutet. Das Befestigungselement 33 besteht aus einer Grundplatte 34, die über Schraubverbindungen 35, 36 an eine hier nicht näher dargestellte Außenstruktur befestigt werden kann. An der Grundplatte 34 befindet sich ein Aufnahmeteil 37. Dieses Aufnahmeteil 37 ist in Form eines kreisausschnittförmigen Bandes gestaltet, welches etwa 40 mm breit ist.

Das Filter 10 wird von diesem Band bzw. Aufnahmeteil 37 umschlossen. Ein Federstahlbügel 38 ist an Einhängeösen des Aufnahmeteils 37 eingehängt und verschließt unter Vorspannung die Filteraufnahme. Das Federstahlband ist zweckmäßigerweise auf der einen Seite lösbar befestigt. Auf der anderen Seite ist es in eine Öse nach Art eines Scharniers eingehängt. Das Aufnahmeteil 37 besitzt über der gesamten Innenfläche Vertiefungen. Der Außenmantel des Filters 10 weist über seinen gesamten Umfang einen Mehrkant auf. Der Mehrkant ist geeignet in den Vertiefungen einzurasten und damit das Filter gehen Verdrehen zu sichern, andererseits aber eine Befestigung des Filters in nahezu jeder Stellung zuzulassen. Das gesamte Befestigungselement 33 ist zweckmäßigerweise als Kunststoffspritzgußteil ausgestaltet. Eine Befestigung des Filters über ein solches Kunststoffteil hat den Vorteil, daß zumindest in Teilbereichen Schwingungen die beispielsweise von einer Brennkraftmaschine erzeugt werden, innerhalb des Materialgefüges abgedämpft werden und damit stark vermindert auf das Filter wirken.

## Patentansprüche

1. Ölbadluftfilter bestehend aus einem Gehäuse mit einem Rohlufteinlaß und einem Reinluftauslaß, wobei im Gehäuse (10) ein vorzugsweise aus Kunststoff bestehendes Mittelrohr (17) angeordnet ist und auf dem Mittelrohr (17) ein Filterelement (18) befestigt ist, welches im wesentlichen zylinderförmig ausgestaltet ist, wobei das Gehäuse (10) am geodätisch unteren Ende mit einem insbesondere Kunststoffdeckel (13) verschlossen ist und dieser Kunststoffdeckel (13) mittels Schnapp- oder Rastelemente (14) mit dem Gehäuse (10) verbindbar ist, wobei ein Verschlußelement (19) vorgesehen ist welches gleichzeitig den Boden des Filterelements (18) bildet und sich in den Kunststoffdeckel (13) erstreckt.

2. Ölbadluftfilter nach Anspruch 1, wobei das Verschlußelement (19) über einen Bajonettverschluß (20) mit dem Mittelrohr (17) verbunden ist.

3. Ölbadluftfilter nach einem der vorherigen Ansprüche, dadurch gekennzeichnet, daß an der Verbindungsstelle zwischen Gehäuse (10) und Boden (13) eine Dichtung (22) angeordnet ist oder Gehäuse (10) oder Boden (13) mit einer Dichtungslippe versehen ist.

4. Ölbadluftfilter nach Anspruch 1 oder 2, dadurch gekennzeichnet, daß das Verschlußelement (19) in Verbindung mit dem Boden (13) und/oder dem Gehäuse (10) eine Abdichtung der Verbindungsstelle zwischen Gehäuse und Boden bewirkt.

5. Ölbadluftfilter nach einem der vorherigen Ansprüche, dadurch gekennzeichnet, daß das Gehäuse eine Polygon-Außenkontur aufweist und über ein in die Kontur eingreifendes Verschlußsystem (33, 34, 35) befestigbar ist.

6. Ölbadluftfilter nach einem der vorherigen Ansprüche, wobei das Mittelrohr (17) im Bereich der Befestigung an dem Gehäuse (10) mit einem Ringwulst (24) versehen ist, das Gehäuse eine ringförmige Vertiefung (23) aufweist zum formschlüssigen Verbinden von Gehäuse und Mittelrohr.

7. Ölbadluftfilter nach Anspruch 6, dadurch gekennzeichnet, daß das Mittelrohr (17) im Bereich der Verbindungsstelle mit dem Gehäuse (10) wenigstens eine Lippendichtung (25) aufweist.
